# EUROPEAN PATENT APPLICATION

(11) **EP 0 694 584 A2**
(43) Date of publication of application: **31.01.1996**
(21) Application number: 95111919.7
(22) Date of filing: 28.07.1995
(51) Int. Cl.: C08L 83/07, C08K 9/06, C08G 77/02, G03G 15/20

(54) **Toner fixing roller**

(30) Priority: 29.07.1994 JP 197524/94
(71) Applicant: Dow Corning Toray Silicone Company, Limited, Tokyo 103 (JP)
(72) Inventor: Nakamura, Akito, Dow Corning Toray Silicone Co.Ltd, Nihonbashi-muromachi, Chuo-ku, Tokyo 103 (JP); Ushio, Yoshito, Dow Corning Toray Silicone Co.Ltd, Nihonbashi-muromachi, Chuo-ku, Tokyo 103 (JP)
(74) Representative: Spott, Gottfried, Dr.

(57) **Abstract**

The reinforcing silica filler in a silicone rubber composition suitable for toner fixing rollers contains at least one type of siloxane group in which silicon atoms are bonded to at least one substituted or unsubstituted hydrocarbon radical. The presence of this type of filler provides the combination of excellent toner releasing characteristics and excellent wear resistance.

## Description

The present invention relates to toner fixing rollers for electrophotographic copiers and printers. Specifically, our invention provides toner fixing rollers containing a rubber layer formed from curable organosiloxane compositions containing a specified class of reinforcing silica fillers. These rollers have excellent toner releasing characteristics and wear resistance.

In equipment such as electrophotographic copying machines, facsimile machines, and laser beam printers, an electro-photographically developed toner image on the photoreceptor is transferred to paper. It is then thermally bonded to the paper or other medium using fixing rollers. Silicone rubber, also referred to as organosiloxane rubber, is often used for the contact surface of this type of the fixing roller.

Examples of silicone rubber compositions that are used to form the contact surface of fixing rollers include: JP-A 56-114975; JP-A 57-149354; JP-A 61-158362; and JP-A 5-214250.

The fixing roller described in JP-A 56-114975 requires compounding a large amount of finely divided inorganic fillers, such as silica and quartz powders, with the rubber to improve wear resistance. The large amounts of filler cause gradual degradation of the toner releasing properties, to the extent that it is no longer possible to obtain a clear image.

Although the fixing roller of JP-A 57-149354 initially exhibits good toner releasing characteristics, it also requires a large amount of inorganic filler with the same shortcomings. If the concentration of inorganic filler in the rubber layer of the fixing roller is reduced, the outer silicone rubber layer wears out relative rapidly during repetitive copying.

Because the fixing roller of JP-A 61-158362 is compounded with a polymethylsilsesquioxane exhibiting only limited reinforcement of the cured elastomer, the rubber layer exhibits poor wear resistance.

Referring to the fixing roller described in JP-A 5-214250 the use of a bridging resinous organopolysiloxane makes it possible to reduce the concentration of inorganic filler and to obtain a fixing roller of good toner releasing characteristics. However, the rubber layer of this fixing roller sustains excessive wear during use.

Thus, the prior art approach to improve the toner releasing characteristics of the fixing roller is to reduce the amount of inorganic filler which causes a drastic reduction in the wear resistance of the rubber layer. It has therefore been difficult to obtain a fixing roller exhibiting both excellent toner releasing characteristics and wear resistance.

These prior art problems are solved when the reinforcing silica in the curable organosiloxane composition is a precipitated type silica containing organosiloxane units with 1, 2 and/or 3 hydrocarbon radicals in addition to the SiO_{4/2} units.

The present invention provides a toner fixing roller comprising a metal core and a rubber layer covering said core, wherein the rubber in said layer is the cured product of a curable organosiloxane composition comprising:
(A) 100 parts by weight of an organopolysiloxane containing at least two silicon-bonded alkenyl radicals per molecule;
(B) from 3 to 100 parts by weight of finely divided reinforcing filler consisting of a hydrophobic wet-process reinforcing silica, wherein said filler comprises SiO_{4/2} units and organosiloxane units selected from the group consisting of R¹₃SiO_{1/2}, R¹₂SiO_{2/2}, and R¹SiO_{3/2} units, and exhibits a surface area of at least 200 m²/g, each R¹ is individually selected from substituted or unsubstituted monovalent hydrocarbon radicals, and the molar ratio of said organosiloxane units to SiO_{4/2} units is from 0.08:1 to 2.0:1; and
(C) a quantity of a curing agent sufficient to cure said composition.

The curable organopolysiloxane, ingredient A, is the principal ingredient of our curable organosiloxane compositions. Each molecule of ingredient A must contain at least 2 silicon-bonded alkenyl radicals. Suitable alkenyl radicals are vinyl, allyl, butenyl, pentenyl group, and hexenyl, with vinyl and hexenyl radicals being preferred.

The bonding site of the alkenyl radical in ingredient A is not particularly limited. It can be located at terminal and/or non-terminal positions of the molecular chain. The silicon-bonded hydrocarbon radicals, other than alkenyl, include alkyl such as methyl, ethyl, propyl, butyl, and pentyl; aryl radicals such as phenyl, tolyl, and xylyl; aralkyl such as benzyl or phenethyl; and substituted or unsubstituted monovalent hydrocarbon groups such as chloropropyl group, 3,3,3-trifluoropropyl group, and 3-chloropropyl. Methyl and phenyl are the preferred hydrocarbon radicals other than alkenyl.

It is also preferable that at least 50 mole % of all of the hydrocarbon radicals bonded to silicon atoms of ingredient A are methyl radicals, because they can add excellent toner releasing characteristics to the fixing roller obtained by curing the present composition.

The molecular structure of ingredient A is not particularly limited. This polymer molecules can be linear, partially branched, cyclic, network, or a combination of these structures. Linear and partially branched molecules are preferred.

The viscosity of ingredient A is also not particularly limited, and ranges from low viscosity liquid organopolysiloxanes to gum type, high viscosity organopolysiloxanes. The viscosity of ingredient A is preferably at least 100 centipoise (0.1 Pa.s), measured at 25° C.

Organopolysiloxanes suitable as ingredient A include trimethylsiloxy-capped methylvinylpolysiloxanes, trimethylsiloxy-capped dimethylsiloxane/methylvinylsiloxane copolymers, trimethylsiloxy-capped dimethylsiloxane/methylvinylsiloxane/methylphenylsiloxane copolymers, trimethylsiloxy-capped methylvinylsiloxane/methyl(3,3,3-trifluoropropyl)siloxane copolymers, dimethylvinylsiloxy-capped dimethylpolysiloxanes, dimethylvinylsiloxy-capped methylvinylpolysiloxanes, dimethylvinylsiloxy-capped methylphenylpolysiloxanes, dimethylvinylsiloxy-capped dimethylsiloxane/methylvinylsiloxane copolymers, dimethylvinylsiloxy-capped dimethylsiloxane/methylvinylsiloxane/methylphenylsiloxa ne copolymers, dimethylvinylsiloxy-capped methyl (3,3,3-trifluoropropyl)polysiloxane, dimethylvinylsiloxy-capped dimethylsiloxane/methyl (3,3,3-trifluoropropyl)siloxane copolymers, dimethylhydroxysiloxy-capped methylvinylpolysiloxanes, dimethylhydroxysiloxy-capped dimethylsiloxane/methylvinylsiloxane copolymers, dimethylhydroxysiloxy-capped dimethylsiloxane/methylvinylsiloxane/methylphenyl siloxane copolymers, dimethylhydroxysiloxy-capped methylvinylsiloxane/methyl (3,3,3-trifluoropropyl)siloxane copolymers, and resinous organopolysiloxanes consisting of CH₂=CH(CH₃)₂SiO_{1/2} units, (CH₃)₃SiO_{1/2} units, and SiO_{4/2} units, and combinations of two or more of these polymers.

Ingredient B of the present compositions is a finely divided hydrophobic wet-process type of reinforcing silica that is responsible for the excellent wear resistance and toner releasing characteristics exhibited by our toner fixing rollers. In addition to the SiO_{4/2} group characteristic of all types of silica, the interior portion of the filler of ingredient B must also contain at least one type of organosiloxane unit selected from the group consisting of R¹₃SiO_{1/2} units, R¹₂SiO_{2/2} units, and R¹SiO_{3/2} units. R¹ is individually selected from substituted or unsubstituted monovalent hydrocarbon radical. Suitable hydrocarbon radicals include alkyl such as methyl, ethyl, propyl, butyl, and pentyl; alkenyl such as vinyl, allyl, butenyl, pentenyl, and hexenyl; aryl such as phenyl, tolyl and xylyl; aralkyl such as benzyl or phenethyl; and substituted alkyl such as 3-chloropropyl or 3,3,3-trifluoropropyl.

At least a portion of the hydrocarbon radicals represented by R¹ are preferably methyl, and any remainder are vinyl and/or phenyl.

The molar ratio of the organosiloxane units to SiO_{4/2} units must be in the range of from 0.08 to 2.0, and preferably from 0.2 to 1.5. If this molar ratio is less than 0.08, the dispersibility of this silica in ingredient A is considerably low. If the molar ratio exceeds 2.0, the reinforcing characteristics of this silica decrease drastically, and the wear resistance of the fixing roller obtained is markedly low.

The organosiloxane units present in ingredient B are determined by the types and relative amounts of reactants used to prepare this ingredient. The types and concentrations of these units are determined by complete decomposition of ingredient B by reacting it with a stoichiometric excess of an alkoxysilane, such as tetraethoxysilane or methyltriethoxysilane, using a basic compound such as potassium hydroxide as a catalyst. The resultant mixture of silanes is then analyzed using gas liquid chromatography.

To achieve the desired wear resistance for our toner fixing rolls, the specific surface area of ingredient B must be at least 200 m²/g, and preferably at least 300 m²/g. This property can be measured using known analytical procedures such as the method developed by Brunauer, Emmett and Teller, referred to as the BET method.

The method used to prepare ingredient B is not particularly limited. One preparative method is described in JP-A 61-56255. In that method, a tetraalkoxysilane is added to a vigorously stirred mixture of 1) an organoalkoxysilane such as an organotrialkoxysilane, diorganodialkoxysilane, or triorganoalkoxysilane, 2) an alcohol, and 3) concentrated aqueous ammonia.

Alternatively, a mixture of a cyclic diorganosiloxane and organoalkoxysilane, such as organotrialkoxysilane, diorganodialkoxysilane, or triorganoalkoxysilane, are re-equilibrated using a basic compound, such as potassium hydroxide, as a catalyst, and the reaction mixture is then neutralized. The resultant organopolysiloxane is blended with methanol and concentrated ammonia, and a tetraalkoxysilane is next added to the resultant mixture with vigorous stirring. When prepared using these methods, ingredient B is obtained as a gel-like dispersed liquid. The final ingredient B is obtained by removing methanol, ammonia gas and other compounds present in the reaction mixture.

Ingredients A and B are blended by kneading them together. A preferred method for combining these ingredients is to blend and knead the reaction mixture containing ingredient B with ingredient A, prior to the isolation of ingredient B from methanol, ammonia gas, and other materials as described above.

The concentration of ingredient B in our curable organosiloxane composition is from 3 to 100 parts by weight for each 100 parts by weight of ingredient A.

When the concentration of ingredient B is less than 3 parts by per 100 parts of ingredient A, the wear resistance of the final toner fixing roller is adversely affected. When the concentration of ingredient B exceeds 100 parts by weight per 100 parts of ingredient A, the toner releasing characteristics of the fixing roller are drastically degraded.

Ingredient C of the present compositions includes a crosslinking agent for ingredient A. This ingredient contains one or more compounds that react with ingredient A to achieve curing of the organosiloxane composition and, optionally a catalyst for this reaction.

Examples of ingredient C include organic peroxides and, when ingredient A contains alkenyl radicals, a mixture of a platinum-containing catalyst and an organopolysiloxane containing at least 2 silicon-bonded hydrogen atoms per molecule.

The organic peroxide is benzoyl peroxide, t-butyl perbenzoate, 2,4-dichlorobenzoyl peroxide, monochlorobenzoyl peroxide, dicumyl peroxide, or 2,5-dimethyl-2,5-di(t-butyl peroxy)hexane.

Suitable platinum-containing catalysts are platinum black, platinum-containing finely divided silica, platinum-containing activated carbon, chloroplatinic acid, complexes of chloroplatinic acid and olefins, complexes of chloroplatinic acid and alkenylsiloxanes, alcohol solutions of chloroplatinic acid, and particles of finely divided thermoplastic organic resins in which such platinum catalyst is encapsulated. Suitable thermoplastic resins are polycarbonate resins, poly(methylmethacrylate) resins, polystyrene resins and silicone resins.

Organohydrogenpolysiloxanes, containing at least two hydrogen atoms bonded to silicon atoms in a molecule, that are used as the crosslinking portion of our ingredient C are trimethylsiloxy-capped methylhydrogenpolysiloxanes, trimethylsiloxy-capped dimethylsiloxane/methylhydrogensiloxane copolymer, dimethylhydrogensiloxy-capped dimethylpolysiloxanes, dimethylhydrogensiloxy-capped dimethylsiloxane/methylhydrogensiloxane copolymers, and trimethylsiloxy-capped methylphenylsiloxane/methylhydrogensiloxane copolymers. Curable compositions of the present invention can also contain one or more of the above organohydrogenpolysiloxanes.

The concentration of ingredient C is not particularly limited as long as it is sufficient to crosslink our organosiloxane composition. When ingredient C is an organic peroxide, the concentration of this ingredient is preferably in the range of from 0.1 to 10 parts per 100 parts by weight of ingredient A.

When ingredient C is a mixture of platinum-containing catalyst and an organohydrogenpolysiloxane, the concentration of the catalyst is equivalent to from 0.1 to 1000 parts by weight of platinum metal per one million parts of ingredient A. Preferably, the concentration of the organohydrogenpolysiloxane is in the range of from 0.5 to 20 parts by weight per 100 parts of ingredient A.

When ingredient C is a mixture of a platinum-containing catalyst and an organohydrogenpolysiloxane containing at least 2 silicon-bonded hydrogen atoms per molecule, it is preferable to add an inhibitor for the crosslinking reaction to improve the storage stability and handling workability. Suitable inhibitors are alkynyl alcohols such as 3-methyl-1-butyne-3-ol, 5-dimethyl-1-hexyne-3-ol and phenylbutynol; en-yne compounds such as 3-methyl-3-penten-1-yne and 3,5-dimethyl-3-hexen-1-yne; and cyclic alkenyl-substituted siloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; and benzotriazole.

As long as the objectives of the present invention are not impaired, optional ingredients, other than ingredients A, B, may be present in our curable composition. These optional ingredients include inorganic fillers such as fumed silica, precipitated silica, titanium dioxide, alumina, and quartz powder; inorganic fillers which are surface treated with organosilicon compounds such as organoalkoxysilanes, organochlorosilanes, or organosilazanes; pigments such as carbon black or iron oxide red; heat stabilizers, such as magnesium oxide, cerium silanolate, and cerium fatty acid salts; anti-static agents; flame retardants; internal release agents; and plasticizers.

The method for preparing our curable rubber compositions, used to fabricate our chemical rollers, is not particularly limited. One method comprises blending the product obtained by kneading ingredients A and B in a mixer-kneader, such as a two roll mill, kneader-mixer, or pressure kneader-mixer, with ingredient C. Alternatively, ingredients A, B, and C are mixed and kneaded uniformly using a mixer-kneader, such as a Henschel™ mixer, Ross™ mixer, kneader-mixer, or a double-shaft, continuous kneader-extruder.

The method whereby our curable organosiloxane composition is molded on to a metal roller core to form a toner fixing roller of this invention is not particularly limited. Suitable methods include covering the outer surface of a roller core bar with the present composition using a known rubber-molding machine, such as compression molding machine, injection molding machine, or a transfer molding machine, and then heating the covered roll bar at a temperature of from 50 to 250° C for a period sufficient to at least partially cure the composition. This period can be from several seconds to several minutes.

The coated fixing roller molded in this manner is preferably post-cured by additional heating in a hot air circulating oven. If the cured surface of our toner fixing roll is polished following completion of the molding operation, its smoothness and dimensional accuracy can be improved.

An alternative method for using our curable organosiloxane composition to fabricate a toner fixing roll comprises covering the outer surface of a fixing roller prepared using a conventional curable organosiloxane composition with a layer of our curable composition and then heating the roller to cure the outer layer. The reinforcing filler present in the conventional composition is silica wherein the interior of the particles consists essentially of predominately SiO_{4/2} groups

Because the present curable organosiloxane compositions are fabricated to form toner fixing rollers exhibiting excellent mechanical strength without impairing the formability of the fixing roller, they are applied to fixing rollers of all sizes. Also, by covering a fixing roller made of conventional silicone rubber with a layer of the present compositions and by then curing the composition, it is possible to form a fixing roller exhibiting excellent toner releasing characteristics and wear resistance.

Toner fixing rollers of this invention are suitable for use in equipment such as electrophotographic copying machines, facsimile machines, and laser beam printers.

The following examples further describe the preferred embodiments of our curable organosiloxane compositions which are useful for preparing toner fixing rolls. Unless otherwise indicated, all parts and percentages are by weight and all viscosity values were determined at 25° C.

The toner releasing characteristics of the fixing roller were determined by evaluating the clarity of copies produced after 100,000 sheets of plain paper of A4 size were copied continuously on an electrophotographic copying machine.

The wear resistance of the fixing roller was evaluated by measuring the diameter of the outer surface before and after the production of 100,000 copies to determine the wear exhibited in the silicone rubber layer.

### Reference Example 1

### Preparation of a Reinforcing Hydrophobic Wet-Process Silica

A finely divided reinforcing silica suitable for use in our curable compositions, was prepared by charging 118 g of methanol, 32 g of concentrated aqueous ammonia and 41 g of dimethyldimethoxysilane into a glass reaction vessel, and stirring to homogeneity using a magnetic stirrer. The resulting mixture was then vigorously stirred while 96 g of tetramethoxysilane were added.

The product gelled immediately following addition of the tetramethoxysilane, and stirring was discontinued. This gelled product was stored in a closed container for one week, yielding a dispersed form of finely divided hydrophobic wet-process reinforcing silica. The silica was isolated by removing methanol, ammonia gas, and other ingredients present in the dispersion.

The silica contained CH₃SiO_{3/2} and SiO_{4/2} units. The molar ratio of CH₃SiO_{3/2} units to SiO_{4/2} units was 1.8:1.

The specific surface area of the silica was 620 m²/g, and was measured using the BET method and an automatic measuring apparatus available as model 2200 from Shimadzu Corporation.

### Reference Example 2

This example describes the preparation of a finely divided hydrophobic wet-process reinforcing silica using the method described in JP-A 61-56255.

An organopolysiloxane was prepared by stirring a mixture containing 277 g of octamethylcyclotetrasiloxane, 4.6 g of 1,3,5,7-tetramethyl-1,3,5,7-tetravinylcyclotetrasiloxane, 517 g of methyltrimethoxysilane and 0.43 g potassium hydroxide at 105°C for 2 hours, followed by neutralization using carbon dioxide gas. A mixture containing 39 g of this organopolysiloxane, 118 g of methanol and 32 g of concentrated aqueous ammonia were charged into a glass reaction vessel, and stirred uniformly by a magnetic stirrer while heating at a temperature between 30 and 40°C. 96 g of tetramethoxysilane were then added with vigorous stirring, which was discontinued when the reaction mixture gelled.

A dispersion of finely divided reinforcing hydrophobic wet-process silica was formed when the gelled reaction product was stored in a sealed container at room temperature for a week.

A portion of the dispersion was placed under reduced pressure to remove methanol, ammonia gas and other volatile materials. The residue was a finely divided silica consisting of (CH₃)₂SiO_{2/2} units, CH₃(CH₂=CH)SiO_{2/2} units, CH₃SiO_{3/2} units, and SiO_{4/2} units. The molar ratio of the combination of (CH₃)₂SiO_{2/2} units, CH₃(CH₂=CH)SiO_{2/2} units, and CH₃SiO_{3/2} units relative to SiO_{4/2} unit was 0.37:1.

The specific surface area of this finely divided silica was determined by the BET method described in Reference Example 1 to be 540 m²/g.

### Reference Example 3

### Preparation of Curable Organosiloxane Composition (I)

A curable composition of the present invention, referred to hereinafter as composition I, was prepared by blending to homogeneity 1) as ingredient A, 100 parts of a dimethylvinylsiloxy-terminated dimethylsiloxane/ methylvinylsiloxane copolymer containing 99.84 mole percent of dimethylsiloxane units and 2) as ingredient B, 200 parts of the dispersion of reinforcing hydrophobic wet-process silica prepared in Reference example 1 and containing 25 weight percent of silica. The blending was performed using a kneader-mixer at a temperature of 90°C, and was additionally kneaded at 180°C for 2 hours to yield an organosiloxane rubber base referred to hereinafter as base I.

### Reference Example 4

This example describes the preparation of an organosiloxane rubber base referred to hereinafter as base II.

100 parts of a dimethylvinylsiloxy-terminated dimethylsiloxane/methylvinylsiloxane copolymer containing 99.84 mole percent of dimethylsiloxane units were blended to homogeneity with 200 parts of the liquid dispersion of reinforcing hydrophobic wet-process silica prepared in Reference Example 2. The dispersion contained 25 weight percent of silica. The mixture was blended to uniformly at 90°C in a kneader mixer, and was then further kneaded at 180°C for 2 hours to prepare said base II.

### Reference Example 5

This example describes preparation of a curable organosiloxane rubber base outside the scope of the present invention and referred to hereinafter as base III.

Base III was prepared by blending to homogeneity 100 parts of a dimethylvinylsiloxy-capped dimethylsiloxane/methylvinylsiloxane copolymer containing 99.84 mole percent of dimethylsiloxane units and exhibiting an average degree of polymerization of 3,000; 17 parts of a fumed silica with a specific surface area of 300 m²/g and consisting of SiO_{4/2} units; and 3 parts of a dimethylhydroxysiloxy-terminated dimethylpolysiloxane exhibiting a viscosity of 30 centipoise (0.03 Pa.s). The mixture was blended using a kneader-mixer at room temperature. The composition was then kneaded for two hours at 170°C to yield said base III.

### Example 1

A curable organosiloxane composition of this invention was prepared by blending in a kneader mixer 50 parts of the silicone rubber base I prepared in Reference Example 3 and 50 parts of a dimethylvinylsiloxy-capped dimethylsiloxane/methylvinylsiloxane copolymer containing 99.68 mole percent of dimethylsiloxane units, and having an average degree of polymerization of 3,000. The mixture was kneaded to uniformity at room temperature to prepare an organosiloxane rubber base referred to hereinafter as base IV. 100 parts of base IV and 0.4 part by weight of 2,5-dimethyl-2,5-di(t-butylperoxy)hexane were mixed and kneaded uniformly using a two roll mill to yield an organosiloxane rubber composition suitable for coating a toner fixing roller of the present invention.

A primer identified as DY39-012 primer, a product of Dow Corning Toray Silicone Co., Ltd., was coated uniformly on the outer surface of a cylindrical, roller-core made of iron, and allowed to dry. The roller core was then placed in a hollow, cylindrical roller casting mold. The cavity between the metal roller core and the wall of the mold was filled under pressure with our curable organosiloxane rubber composition described above. The interior of the mold was then heated at 170°C for 10 minutes to partially cure our organosiloxane composition.

The rubber coated fixing roller was then removed from the mold, and heated in a hot air circulating oven at 200°C for 4 hours to complete fabrication of a fixing roller, referred to hereinafter as roller A. The toner releasing characteristics and wear resistance of roller A were evaluated, and the results are reported in Table 1.

### Example 2

A curable organosiloxane composition of this invention was prepared using 50 parts of the organosiloxane rubber base II prepared in Reference Example 4; 7 parts of a resinous organopolysiloxane exhibiting a viscosity of 230 centipoise (0.23 Pa.s) and corresponding to the average molecular formula: [(CH₃)₃SiO_{1/2}]_{1.38}[CH₂=CH(CH₃)₂SiO_{1/2}]_{0.44}[SiO_{4/2}]_{1.0}; 60 parts of a dimethylvinylsiloxy-terminated dimethylpolysiloxane with viscosity 10,000 centipoise (100 Pa.s), 6 parts of an organopolysiloxane corresponding to the average molecular formula: [(CH₃)₃SiO_{1/2}]_{2.0}[(CH₃)₂SiO_{2/2}]_{2.0}[(CH₃)HSiO_{2/2}]_{4.5}[CH₃SiO_{3/2}]_{1.0}, and 0.5 part of a complex of chloroplatinic acid and 1,3-divinyl-1,1,3,3-tetramethyldisiloxane containing 0.4 weight percent of platinum. These ingredients were loaded in a Ross™ mixer, and kneaded to homogeneity at room temperature to yield a curable organosiloxane composition suitable for preparing a toner fixing roller of this invention.

A primer identified as DY39-051A/B primer, a product of Dow Corning Toray Silicone Co., Ltd., was coated uniformly on the outer surface of a cylindrical, roller-core made of iron, and allowed to dry. The roller core was then placed in a roller casting mold, and our curable organosiloxane composition described above was injected into the mold cavity under pressure. The mold was then heated at 150°C for 10 minutes to partially cure our rubber composition. The fixing roller was then removed from the mold and heated in a hot air circulating oven at 200°C for 4 hours to complete fabrication of a fixing roller, referred to hereinafter as roller B. The toner releasing characteristics and wear resistance of fixing roller B were evaluated and the results are summarized in Table 1.

### Example 3

A curable organosiloxane composition of the present invention was prepared by loading a Ross™ mixer with 100 parts of a trimethylsiloxy-terminated dimethylsiloxane/ methylvinylsiloxane copolymer containing 99 mole percent of dimethylsiloxane units and exhibiting a viscosity of 10,000 centipoise (10 Pa.s); 10 parts of a fumed silica exhibiting a specific surface area of 300 m²/g; 30 parts of finely divided quartz; 4 parts of hexamethyldisilazane; and 1 part of water. After kneading the resultant mixture to homogeneity at room temperature, the mixture was kneaded at 120°C under reduced pressure for 2 hours to yield organosiloxane rubber base V.

A curable organosiloxane composition was prepared by blending to homogeneity 140 parts of base V; 3 parts of a trimethylsiloxy-terminated dimethylsiloxane/ methylhydrogensiloxane copolymer containing 0.4 weight percent of silicon-bonded hydrogen atoms; and 0.5 part of a complex of chloroplatinic acid and 1,3-divinyl-1,1,3,3-tetramethyl-disiloxane containing 0.4 weight percent of platinum.

A toner fixing roller was fabricated using the procedure described in Example 2 with this curable organosiloxane composition. A primer identified as DY39-051A/B primer, a product of Dow Corning Toray Silicone Co., Ltd., was coated on the outer surface of this fixing roller, and allowed to dry.

The curable organosiloxane rubber composition described in Example 2 was coated as a 100 µm-thick uniform layer on the outer surface of this fixing roller, following which the roller was heated at 150°C for 10 minutes, and further heated in a hot air circulating oven at 200°C for 4 hours to complete fabrication of a fixing roller, referred to hereinafter as roller C. The toner releasing characteristics and wear resistance of roller C were evaluated and the results are listed in Table 1.

### Comparison Example 1

This example describes a curable organosiloxane composition and a toner fixing roll that are outside the scope of our present invention. An organosiloxane base VI was prepared by loading into a kneader mixer 50 parts of organosiloxane rubber base III, prepared as described in Reference Example 5, and 50 parts of a dimethylvinylsiloxy-terminated dimethylsiloxane/methylvinylsiloxane copolymer containing 99.68 mole percent of dimethylsiloxane units and exhibiting an average degree of polymerization of 3,000. A mixture of 100 parts of organosiloxane rubber base VI and 0.4 part of 2,5-dimethyl-2,5-di(t-butylperoxy)hexane were kneaded to uniformity using a two roll mill to yield a curable organosiloxane composition outside the scope of the present invention.

A toner fixing roller outside the scope of the present invention, referred to hereinafter as roller D, was fabricated as described in Example 1 from this organosiloxane composition. The toner releasing characteristics and wear resistance of roller D were evaluated. These results are given in Table 1.

### Comparison Example 2

This example describes fabrication of a toner fixing roll that is outside the scope of the present invention.

A curable organosiloxane composition was prepared by loading a Ross™ mixer with 100 parts of a trimethylsiloxy-terminated dimethylpolysiloxane exhibiting a viscosity of 10,000 centipoise (10 Pa.s); 20 parts of a dimethylvinylsiloxy-terminated dimethylpolysiloxane exhibiting a viscosity of 10,000,000 centipoise (10,000 Pa.s), 10 parts of a resinous organopolysiloxane exhibiting a viscosity of 230 centipoise (0.23 Pa.s) and the average molecular formula: [(CH₃)₃SiO_{1/2}]_{1.38}[CH₂=CH(CH₃)₂SiO_{1/2}]_{0.44}[SiO_{4/2}]_{1.0} ; 7 parts of an organopolysiloxane exhibiting the average molecular formula: [(CH₃)₃SiO_{1/2}]_{2.0}[(CH₃)₂SiO_{2/2}]_{2.0}[(CH₃)HSiO_{2/2}]_{4.5}[CH₃SiO_{3/2}]_{1.0} and 0.5 part of a complex of chloroplatinic acid and 1,3-divinyl-1,1,3,3-tetramethyldisiloxane containing 0.4 weight percent of metallic platinum. These ingredients were mixed and kneaded to uniformity in the mixer to obtain a curable organosiloxane composition outside the scope of the present invention.

A toner fixing roller, referred to hereinafter as roller E, was fabricated using the curable organosiloxane composition above described and the procedure described in Example 2 which was outside the scope of the present invention. The toner releasing characteristics and wear resistance of roller E were evaluated and the results are enumerated in Table 1.

### Comparison Example 3

This example describes fabrication of a toner fixing roll using a curable organosiloxane composition outside the scope of the present invention.

An organosiloxane rubber base was prepared by loading a Ross™ mixer with 100 parts of a trimethylsiloxy-terminated dimethylsiloxane/methylvinylsiloxane copolymer containing 99 mole percent of dimethylsiloxane units and exhibiting a viscosity of 10,000 centipoise (10 Pa.s); 10 parts by weight of a fumed silica with a specific surface area of 300 m²/g and consisting of SiO_{4/2} units; 30 parts of finely divided quartz, 4 parts of hexamethyldisilazane; and 1 part of water. After these ingredients had been mixed and kneaded to homogeneity under ambient conditions, the mixture was kneaded at 120°C under reduced pressure for 2 hours to yield an organosiloxane rubber base, referred to hereinafter as base VII.

A curable organosiloxane composition was prepared by kneading 140 parts of base VII; 3 parts of a trimethylsiloxy-terminated dimethylsiloxane/methylhydrogensiloxane copolymer containing 0.4 weight percent of silicon-bonded hydrogen atoms; and 0.5 part of a complex of chloroplatinic acid and 1,3-divinyl-1,1,3,3-tetramethyldisiloxane containing 0.4 part of metallic platinum. 100 parts of the resulting mixture were then blended and kneaded with 10 parts of a trimethylsiloxy-capped dimethylpolysiloxane to prepare the final curable organosiloxane rubber composition.

A fixing roller, referred to hereinafter as roller F, was fabricated using the curable organosiloxane composition described above, and the procedure described in Example 2. The toner releasing characteristics and wear resistance of roller F were evaluated and the results are reported in Table 1.

**Table 1**

| | Present Invention | | | Comparison Examples | | |
|---|---|---|---|---|---|---|
| | Ex. 1 | Ex. 2 | Ex. 3 | Ex. 1 | Ex. 2 | Ex.3 |
| Toner Release | Good | Good | Good | No Good | Good | No Good |
| Wear Resistance (mm) | 10 | 8 | 8 | 20 | 30 | 25 |

## Claims

1. A toner fixing roller comprising a metal core and a first rubber layer covering said core, wherein the rubber in said first layer is the cured product of a curable organosiloxane composition comprising:
(A) 100 parts by weight of an organopolysiloxane containing at least two silicon-bonded alkenyl radicals per molecule;
(B) from 3 to 100 parts by weight of a finely divided first reinforcing filler consisting of a hydrophobic wet-process silica, wherein said filler comprises SiO_{4/2} units and organosiloxane units selected from the group consisting of R¹₃SiO_{1/2}, R¹₂SiO_{2/2}, and R₁SiO_{3/2} units, and exhibits a surface area of at least 200 m²/g, each R¹ is individually selected from substituted or unsubstituted monovalent hydrocarbon radicals, and the molar ratio of said organosiloxane units to SiO_{4/2} units is from 0.08:1 to 2.0:1; and
(C) a quantity of a curing agent sufficient to cure said composition.

2. A fixing roller according to claim 1 wherein said curing agent is an organic peroxide.

3. A fixing roller according to claim 1 wherein said curing agent is an organopolysiloxane containing at least 2 hydrogen atoms bonded to silicon atoms in a molecule, and said composition contains a curing catalyst selected from platinum or platinum-containing compounds.

4. A fixing roller according to claim 1 wherein at least a portion of the hydrocarbon radicals represented by R¹ are individually selected from the group consisting of methyl, vinyl, and phenyl radicals; the molar ratio of organosiloxane units to SiO_{4/2} units is from 0.2 to 1.5; and the surface area of said silica is at least 300 m²/g.

5. A fixing roller according to claim 4 wherein at least a portion of the hydrocarbon radicals represented by R¹ are methyl.

6. A fixing roller according to claim 1 wherein at least 50 percent of the silicon-bonded hydrocarbon radicals present in said organopolysiloxane are methyl and the viscosity of said organopolysiloxane is at least 100 centipoise (0.1 Pa.s) at 25° C.

7. A fixing roller according to claim 1 wherein a second rubber layer containing a second reinforcing filler is present between said first layer and said core, and said second reinforcing is a silicaessentially consisting of SiO_{4/2} groups.
